# EUROPEAN PATENT SPECIFICATION

(11) **EP 4 275 930 B1**
(45) Date of publication and mention of the grant of the patent: **27.03.2024**
(21) Application number: 22172470.1
(22) Date of filing: 10.05.2022
(51) Int. Cl.: B60H 1/00, B60H 1/32, F25B 15/06

(54) **ELECTRICAL VEHICLE**
ELEKTROFAHRZEUG
VÉHICULE ÉLECTRIQUE

(43) Date of publication of application: 15.11.2023
(73) Proprietor: Aquafair AB, 702 18 Örebro (SE)
(72) Inventor: ÅHRSTRÖM, Bert-Olof, Örnsköldsvik (SE); CARLMAN, Fredrik, Örebro (SE)
(74) Representative: Bjerkén Hynell KB

(56) References cited:
- WO-A2-2007/110854
- DE-A1-102008 039 908
- US-A1- 2012 042 665

## Description

### Technical field

The present invention relates to an electrical vehicle provided with a thermal energy arrangement configured to supply thermal energy to keep a battery system of the electrical vehicle within an optimal operating temperature interval. An additional object is to provide thermal energy to other parts of the electrical vehicle, e.g. for heating and/or cooling purposes of driver and passenger spaces.

### Background

Since electric vehicles have become so widely used, there is a high demand for longer battery life and higher power output. To achieve this, battery thermal management systems will need to be able to transfer heat away from the battery pack as they are charged and discharged at higher rates. Modern lithium-ion battery packs are robust, and more often than not, can outlive the life of the vehicle that they power. Yet, how long they last actually depends on how they are treated during their lifetime. When we talk about longevity, we are actually referring to how well a battery pack stores charge and how effectively it gives that charge back to a vehicle. Heat is the biggest threat to battery pack longevity. When excessive heat is applied to a battery cell, it makes it harder for the cell to store electrons as effectively as it once could. Unfortunately, heat is unavoidable - pulling energy out of a battery pack at high currents causes a battery to heat up due to internal resistance in the pack.

Many electric vehicles feature liquid cooled battery packs, which is especially required in hotter climate areas, where cooling solutions are pumped through specially designed plates or channels embedded into or situated underneath battery cells. This technology enables battery packs to be kept warm in winter and cool in summer - maintaining optimal temperatures to minimise battery degradation. Liquid cooling is the preferred solution over air cooling, which involves ambient air being channeled over the battery while the car is moving or directed into battery packs via fans. In hot countries, in the peak of summer, air will be too warm to cool battery packs.

To reduce the electricity consumption for heat and cool generation, some car manufacturers such as Jaguar, Nissan, Volkswagen and Tesla have started using air source heat pumps to reduce the electricity consumption for the passenger compartment heater and some manufacturers use the heat to also heat the battery for optimal range. Such heat pumps seem to have a COP (Coefficient of Performance) of about 2-3, which means that 1 KWh of electricity from the battery provides 2-3 KWh of heat in the passenger compartment.

In addition to a low COP for a heat pump at moderate cooling, COP drops drastically at very low temperatures. At about -20°C, the COP on a car air source heat pump may be as low as 1, i.e. at such temperatures it has no advantages over heat generated by electrical resistance having a COP of about 1.

Thus, in the field of thermal energy management and generation in an electrical vehicle there is a demand of using a more energy-efficient technology. One such technology is Mechanical Vapor Recompression (MVR), which is an evaporation method by which a blower, compressor or jet ejector is used to compress, and as a result of the compression, increase the pressure, density and temperature of the vapor produced.

As a result, the vapor can serve as the heating medium for its "mother" liquid or solution being concentrated. Without the compression, the vapor would be at the same temperature as its "mother" liquid/solution, and no heat transfer could take place.

Below some patent documents within the technical field will be briefly discussed.

In the US10793483 a system is described using a mechanical vapor recompression evaporator (MVR) to receive a liquid fraction from a centrifuge and evaporating the liquid fraction by mechanical vapor recompression to produce ammonia-laden water vapor and a concentrated nutrient slurry. The system comprises a dryer for drying the nutrient slurry to a selected moisture content to be available as an ingredient in compounded fertilizer; and an ammonia stripping tower assembly to receive ammonia-laden water vapor from the MVR and from it to precipitate ammonium sulphate salt and condense water as separate products.

In EP2716341, a system and a method are described for liquid treatment by mechanical vapor recompression comprising a fixed fluid-tight evaporator housing. The housing comprises an inlet for feeding liquid to be evaporated into the housing and an outlet from the housing for liquid concentrated by evaporation and an outlet from the housing for discharging vapor boiled off from the liquid by evaporation. The housing comprises a plurality of heating elements within the housing mounted on a common horizontal axis, each of said heating elements having an outer surface for contact with said liquid to be evaporated within the housing and having an internal passage for heating medium and an element inlet and an element outlet for the heating medium.

In WO2022/002708 is disclosed a mechanical vapor recompression (MVR) liquid purification system is disclosed, in particular an MVR water desalination system, comprising a pressure-tight enclosure provided with a first end and a second end, having an essentially circular cylindrical elongated shape along a longitudinal axis A, and numerous evaporation compartments E1-E3, arranged within said enclosure along the longitudinal axis A. The system further comprises a central tube running along the longitudinal axis A of the enclosure through the centers of said evaporation compartments E1-E3, and configured to allow steam to flow from the second end to the first end of the enclosure.

US2012/042665 relates to an electrical vehicle as defined in the preamble of claim 1 in the present application.

The object of the present invention is to achieve an electrical vehicle comprising an improved thermal energy arrangement configured to keep the operating temperature of a battery system of the electrical vehicle with optimal ranges.

The improvement lies in providing a more energy efficient arrangement than presently is applied in the electrical vehicle industry. The thermal energy arrangement may also be applied for other heating and cooling purposes of the electrical vehicle.

### Summary

The above-mentioned objects are achieved by the present invention according to the independent claim 1.

Preferred embodiments are set forth in the dependent claims.

The basic idea behind the present invention is to combine a mechanical vapour recompression (MVR) unit with an absorption cooler unit into a thermal energy arrangement, and using a working liquid, preferably a water-lithium bromide solution including an anti-freezing agent and water, capable of being fluid also at low temperatures. The MVR unit provides a high-efficient producer of hot water to be supplied to the absorption cooler unit that in return supplies the working liquid to the MVR unit. A cooling line is connected to the absorption cooler unit capable of providing cooling to the battery system, and optionally also to other systems of the electrical vehicle, and a heating line is connected to a heat exchanger of the hot water line capable of providing heat to the battery system, and optionally also to other systems of the electrical vehicle.

### Brief description of the drawings

Figure 1 is a block diagram schematically illustrating the electrical vehicle according to the present invention.
Figure 2 is a schematic illustration of the thermal energy arrangement including an MVR-unit, and an absorption cooler unit according to the present invention.

### Detailed description

The electrical vehicle will now be described in detail with references to the appended figures. Throughout the figures the same, or similar, items have the same reference signs. Moreover, the items and the figures are not necessarily to scale, emphasis instead being placed upon illustrating the principles of the invention.

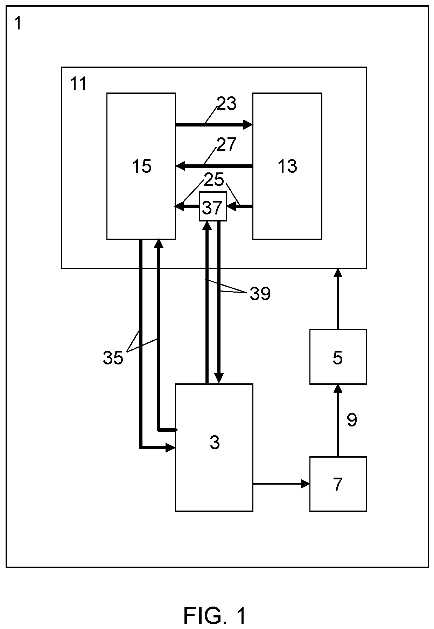

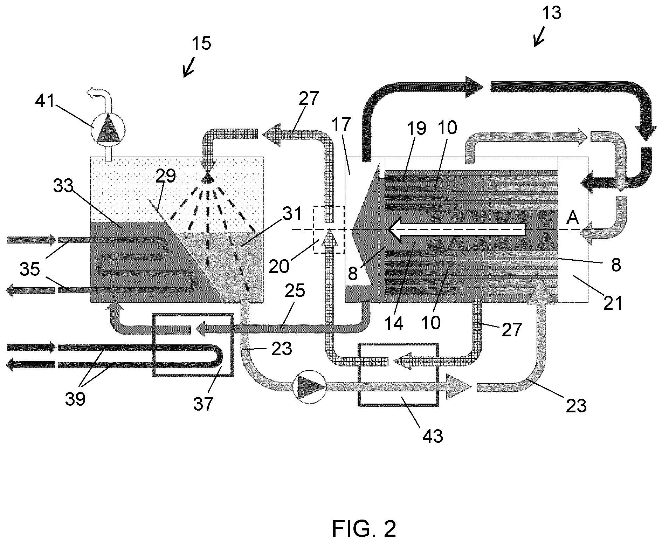

With references to figures 1 and 2, an electrical vehicle 1 is provided, that comprises a battery system 3 configured to generate electrical energy to operate the electrical vehicle. The battery system normally comprises a plurality of battery modules that may arrange in one or many dedicated battery packs, distributed on the vehicle. The term "vehicle" should be interpreted broadly and may comprise e.g. a car, a loader truck, e.g. provided with a crane or other working equipment, mining vehicles, rail bound vehicles, etc.

The electrical vehicle further comprises a control system 5 configured to control various systems of the electrical vehicle, a temperature monitoring system 7 configured to monitor at least one temperature of the battery system 3, and to generate a temperature signal 9 comprising the at least one temperature, that is applied to the control system 5.

The battery system is provided with a thermal energy arrangement 11 arranged to supply thermal energy to keep the battery system 3 within an optimal operating temperature interval. The ranges of the optimal operating temperature interval are dependent on the type of batteries of the battery system and are typically within 20-50 °C.

The thermal energy arrangement 11 comprises a mechanical vapor recompression, MVR, unit 13 and an absorption cooler unit 15.

The MVR-unit 13 comprises a pressure-tight enclosure 2 provided with a first end 4 and a second end 6, and having an essentially circular cylindrical elongated shape along a longitudinal axis A, and, optionally, being essentially horizontally oriented during operation of the arrangement. The MVR-unit further comprises a first end chamber 17, at least one evaporation compartment 19, and a second end chamber 21, arranged within the enclosure 2 along the longitudinal axis A.

The at least one evaporation compartment 19 of the MVR-unit 13 is arranged to receive a working liquid, preferably having a freezing temperature less than -40 °C, from the absorption cooler unit 15 via a working liquid line 23. Preferably, a pump is provided, which is indicated on figure 2, to pump the working liquid into the evaporation compartment.

Hot water condensate from the first end chamber 17 of the MVR-unit 13 is arranged to be supplied to the absorption cooler unit via a hot water line 25, and wherein, as water evaporates in the evaporation compartment 19, a working liquid salt brine solution in the at least one evaporation compartment is arranged to be supplied via a salt brine solution line 27 to the absorption cooler unit 15.

Preferably, the salt brine solution is supplied by the pressure in the evaporation chamber, or a pump is provided along the salt brine solution line 27 to pump the salt brine solution into the absorption cooler unit 15.

The absorption cooler unit 15 comprises two compartments separated by a partial inner wall 29, a first compartment 31 into which the salt brine solution is supplied, and a second compartment 33 into which the hot water condensate is supplied, wherein the two compartments are under high vacuum, which is provided by a high vacuum pump 41.

A cooling line 35 is provided and immersed in water within the second compartment 33. The inlet of the cooling line 35 is connected to a cooling system of the electrical vehicle. The heat carried by the liquid supplied to the cooling line 35 will then heat the water within the second compartment 33 of the absorption cooler unit 15, which then evaporates even faster, and the outlet of the cooling line 35 is provided with a cooling liquid.

A first heat exchanger 37 is arranged at the hot water line 25 configured to transfer heat from the hot water condensate in the hot water line to a heating liquid in a heating line 39.

The control system 5 is configured to receive the temperature signal 9, and to control the thermal energy arrangement 11 in dependence of the at least one temperature, to supply the generated thermal energy to the battery system 3 via the cooling line 35 and the heating line 39 to keep the temperature of the battery system 3 within the predetermined temperature interval.

In an embodiment, the working liquid is a lithium bromide solution in combination with an anti-freezing solution and water, and the working liquid salt brine solution is essentially a lithium bromide salt brine solution and any anti-freezing solution. The anti-freezing solution has the capability of securing a freezing point of the working liquid to be below at least -40°C.

The anti-freezing solution is one or many of inorganic acids, organic acids, hybrid organic acids ionic liquids, ethylene glycols, polyethylene glycols, hydrocarbon compounds such as short- to middle-chain alcohols, nitrate- or silicate-based antifreeze compounds.

According to another embodiment, a high vacuum pump 41 is arranged in connection to the second compartment 33 to provide high vacuum within the absorption cooler unit 15.

Preferably, a second heat exchanger 43 is arranged at the working liquid line 23 to further increase the temperature of the working liquid by receiving heat from the salt brine solution.

According to one further embodiment, the MVR-unit 13 and the absorption cooler unit 15 are arranged within a common enclosure making up the thermal energy arrangement 11, and that the common enclosure comprises a hermetically sealed cylindrical enclosure having an essentially circular cross-section, and being provided with connections to the heating line 39, and to the cooling line 35.

Preferably, the common enclosure has a size that enables mounting in the electrical vehicle, thereby having a length in the interval of e.g. 0.3-0.8 m, and an outer diameter in the interval of e.g. 0.2-0.4 m.

As an alternative variation the MVR-unit and absorption cooler unit are separate units.

In another embodiment, the thermal energy supplied to the battery system 3 via the cooling line 35 and the heating line 39, and that the battery system 3 is provided with a cooling/heating pipe system structured to receive liquid from the cooling line 35 and the heating line 39. The control system is configured to control the temperature by e.g. controlling valves of the cooling and heating lines to regulate the flow of liquid required to obtain the requested temperature.

According to another embodiment, the at least one evaporation compartment 19 comprises two essentially planar and circular sidewalls 8 separating the evaporation compartment from the end chambers. The at least one evaporation compartment is provided with a plurality of longitudinal pipes 10 running from one sidewall 8 to the other sidewall 8, and that the circular sidewalls are provided with openings for said plurality of pipes thereby establishing connection between the first end chamber 17 and the second end chamber 21.

According to the invention, the MVR-unit comprises a central tube 12 running along the longitudinal axis A of the enclosure 2 through the center of the at least one evaporation compartment 19, and configured to allow steam to flow from the second end chamber 17 to the first end chamber 21 of the enclosure. The MVR-unit further comprises a turbine assembly 14, preferably arranged in relation to the first end 4 of the enclosure 2 and at least partly within the central tube 12, comprising a turbine provided with turbine vane members structured to provide steam flow in an axial direction, i.e. along the longitudinal axis, within the central tube 12 from the second end 6 to the first end 4 of the enclosure 2. In figure 2, the steam flow within the central tube is indicated by a block arrow. The turbine assembly 14 comprises a motor 20 for rotating the turbine at a variable rotational speed. Preferably, the motor is arranged in relation to the first end of the enclosure 2.

In figure 2, a high-pressure steam flow from the first end chamber 17 to the second end chamber 21 is indicated by dark block arrows, and a low-pressure steam flow from the evaporation compartment 19 to the second end chamber 21 is indicated by gray block arrows. The respective steam flows are transferred though one or many pipes or tubes arranged at the outside of the evaporation compartment or integrated within the compartment, and/or in walls of the compartment.

Particularly, water is separated from the working liquid by evaporation inside the at least one evaporation compartment 19, and the steam is compressed when flowing through the central tube by being accelerated by the turbine member.

In a further embodiment the thermal energy arrangement 11 is further arranged to supply thermal energy from the cooling liquid and heating liquid to cool and/or heat various parts of the electrical vehicle, e.g. the driver and passenger space.

Below is a further description of embodiments of the electrical vehicle according to the present invention.

A working liquid having a freezing point less than -40 °C, preferably a water-lithium bromide solution including an anti-freezing agent and water, is supplied into the evaporation compartment of the MVR unit, wherein when the working liquid is subjected to evaporation in the evaporation compartment, water is separated from the working liquid as steam.

The working liquid is supplied into the evaporation compartment, e.g. sprayed via nozzles. The steam is provided to a central tube of the MVR unit where a turbine is provided configured to generate a steam flow through the central tube from the second end chamber of the MVR unit to the first end chamber of the MVR unit. The MVR unit comprises a fluid-tight enclosure capable to withstand high pressure. The evaporation compartment is provided with a plurality of evaporation pipes running essentially along axis A of the MVR-unit. The evaporation pipes are symmetrically arranged around the central tube and preferably evenly spread on a cross-sectional plane perpendicular to the horizontal axis. The evaporation pipes are arranged to receive and transfer steam from the second end chamber to the first end chamber. The MVR-unit has an elongated shape having an essentially circular cylindrical outer shape along the horizontal axis.

In the MVR-unit, the working liquid, e.g. the water-lithium bromide solution, is separated from the water by evaporation inside the evaporation compartment, which is provided with a plurality of horizontal pipes. The steam is compressed when flowing through the central tube by being accelerated by the turbine member, and is used exclusively applied to:
1) drive the process further and this is an "expensive" process because LiBr in the working liquid is very tightly bound to the water - therefore it is important to have a "cheap" heat source, and
2) to create the condensate of clean water inside the pipes. There is now a salt brine solution left at the bottom of the evaporation compartment with increasing salt concentration as the water evaporates.

Thus, a working liquid salt brine solution, preferably a lithium bromide salt brine solution and an anti-freezing agent, is left at the bottom of the evaporation compartment, and wherein the salt brine solution is supplied via a salt brine solution line to the absorption cooler unit, and wherein the salt brine solution may be supplied by the pressure in the evaporation compartment, preferably, no pump is required.

The hot water condensate from the MVR-unit, more particularly from the first end chamber, is now supplied to the absorption cooler unit (on the left in figure 2) via a hot water line. Since it is already under pressure, it does not need to be pumped. Heat is provided by a first heat exchanger in this step.

The absorption cooler unit comprises two compartments separated by a partial inner wall. The two compartments are under high vacuum.

The hot water condensate is supplied to one of the compartments, the first compartment, via the hot water line.

Preferably, a first heat exchanger is arranged along the hot water line, wherein the first heat exchanger is provided with a heating line provided with a liquid to receive heat from the hot water condensate. The heating line is connected to one or many systems of the electrical vehicle required to be heated.

The two compartments of the absorption cooler unit are separated from each other by a partial partition, a partial wall. The compartments are under high vacuum created by two separate processes.

One process is the re-association of the salt brine solution, i.e. the lithium bromide (LiBr) concentrate, with water that creates a strong negative pressure due to the strong hygroscopy of LiBr. If that is not sufficient, a vacuum pump is provided, which goes in and supports. Hygroscopy is the phenomenon of attracting and holding water molecules via either absorption or adsorption from the surrounding environment, which is usually at normal or room temperature.

Another process is that due to the rapid pressure drop, the water will evaporate very quickly and thus change to a less dense medium. The pressure will drop and with it, and so will the temperature.

Cooling pipes are provided and immersed in the cold water within the second compartment 33. The inlet of the cooling pipe is connected to e.g. a cooling system of the electrical vehicle applied to cool the battery, and e.g. the interior of the vehicle. The heat carried by the liquid supplied to the cooling pipes will then heat the water within the second compartment of the absorption cooler, which then evaporates even faster. Typically, the cold water out of the system is between 6-12 °C.

The steam will seek its way to the first compartment 31, where it meets the supplied salt brine solution, e.g. supplied by nozzles as a shower of finely divided LiBr brine. The reason it is sprayed is simply to create a larger specific surface area and maximize the probability that LiBr molecules absorb H₂O molecules. During the absorption of water molecules, the absolute volume decreases during the re-association and thereby the pressure in the chamber decreases. The hydrate, i.e. the working liquid, e.g. the water-lithium bromide solution, that is created will be hot as it is an exothermic reaction.

The lithium bromide hydrate is finally returned to the evaporation compartment of the MVR-unit, but first, optionally, passes a second heat exchanger on the way back to further increase its temperature in order to further approach the temperature in the "salt bath" within the evaporation compartment. In the heat exchanger the hydrate receives heat from the salt brine. The cycle is closed and the device is in mass and energy equilibrium.

To provide the temperature control of the battery system, the cooling liquid, water and an anti-freezing agent, is pumped through specially designed plates or channels embedded into or situated underneath battery cells of the battery system. This technology enables battery packs to be kept warm in winter and cool in summer - thus maintaining optimal temperatures to minimise battery degradation.

The heat generated by MVR can be utilized on two distinct heat applications during cold periods:
1) to heat the battery to the optimum temperature, during operation and before charging on the road (some car manufacturers have the option to preheat the battery before charging during operation, thereby reducing the charging time).
2) to heat the indoor climate in the vehicle through a water-to-air heat exchanger (passenger compartment heating).

By using MVR heating for the passenger compartment and battery, you extend the range of an electric vehicle driven by two factors:
- the passenger compartment heater will draw less electricity to keep the passenger compartment warm; electricity that can instead be used to drive the vehicle longer.
- Lithium-ion batteries have significantly reduced efficiency at lower temperatures; i.e. output becomes lower than at a higher temperature, for a certain use of the battery. In addition, lithium-ion batteries charge less efficiently at lower temperatures, which causes unwanted long charging stops during the journey

Various studies show that the range, depending on temperature and car brand, can be shortened by 20 - 45% on cold days, especially at extreme temperatures (such as -20 °C). In addition: for long traffic jams and accident sites, where the speed is close to zero but where the passenger compartment heater needs to be running to maintain the passenger compartment temperature, the range can go down to a very short range, or even zero range (alternatively switching off the passenger compartment heater is not desirable at low temperatures).

The advantage of MVR is that you do not take heat from the surrounding air (like a heat pump). In other words, COP is more or less independent of ambient temperature.

The solution to the above-mentioned challenge lies in the MVR-technology's extreme ability to create "a lot" of heat in the form of hot water, from "a little" electrical energy. Given that MVR generates hot liquid (depending on negative pressure and medium), the technology is suitable for both interior heating (by letting the hot medium run in a standard liquid-to-air heat exchanger) as well as heating Lithium- ion battery. The latter is most effectively achieved if a liquid-borne loop is built into the battery pack where the loop (more or less adiabatically) emits its heat and thereby heats the battery to a suitable and optimal temperature. Already today, liquid loops are used to cool batteries during the hot months, so the concept is fully applicable.

It is unequivocal that MVR with an expected COP of at least 10 will significantly increase the range. For interior heating, this is obvious as the second best solution has a COP of 2-3. In other words, MVR based technology will draw at least 3 times less electricity than a standard air-to-heat pump.

Regarding battery temperature, heating the battery should also significantly increase the range, although it remains to make a more accurate calculation that takes into account range extension with increased battery temperature as well as heat demand to heat the battery to optimal temperature and an understanding of what the optimal temperature is.

To make a rough estimate, it can be assumed that the range of an electric car at minus 20°C drops by 30% (there are examples of almost 50%) driven solely by the cold battery (i.e. despite the interior heating). If you assume a battery capacity of 70 KWh, it is a loss of 20 KWh. If we also assume that we reduce the battery loss by 20 KWh with the help of 20 KWh supplied heat and if we assume a COP of 10, then we only need 2 KWh of electricity to increase the range by 20-2 = 18 KWh. In other words, we can, maintain full range with only a marginal electricity consumption for battery heating (and passenger compartment heating).

An MVR design can generate hot water with a temperature of 100 °C. That temperature is well enough to generate cold with the help of an absorption cooler, with a COP of about 0.7. With a COP of 10 for heat generation, you would thus get a COP on cooling of 6-7. It should be compared to a COP on air conditioning systems in cars that seem to be around 3-4. Thus, MVR together with absorption cooling would have a much higher energy efficiency than conventional methods.

In a property-based MVR facility, water is used because it can be assumed that it will never freeze, i.e. the indoor temperature should never go below zero. In a car, this is not the case; a parked electric car, without mains access can in the worst case be affected by temperatures of -40 °C (or lower). Therefore, the working liquid in a vehicle-based MVR must contain an antifreeze agent that must also work well in a boiling and condensing cycle without corroding the metals in the structure or leaving deposits. A working liquid being lithium bromide solution in combination with an anti-freezing agent and water is applied herein. In the same way, the loop that regulates the temperature in the battery pack (heating and possibly cooling) must not freeze either. The latter, however, is much simpler because that loop is heat exchanged with the MVR loop and does not have to have the same specific properties as the working liquid applied in the MVR-unit.

The present invention is not limited to the above-described preferred embodiments.

Various modifications may be used. Therefore, the above embodiments should not be taken as limiting the scope of the invention, which is defined by the appending claims.

## Claims

1. An electrical vehicle (1) comprising a battery system (3) configured to generate electrical energy to operate the electrical vehicle, a control system (5) configured to control various systems of the electrical vehicle, a temperature monitoring system (7) configured to monitor at least one temperature of said battery system (3), and to generate a temperature signal (9) comprising said at least one temperature, wherein said battery system is provided with a thermal energy arrangement (11) arranged to supply thermal energy to keep the battery system (3) within an optimal operating temperature interval,
**characterized in that** said thermal energy arrangement (11) comprises a mechanical vapor recompression, MVR, unit (13) and an absorption cooler unit (15),
the MVR-unit (13) comprises a pressure-tight enclosure (2) provided with a first end (4) and a second end (6), and having an essentially circular cylindrical elongated shape along a longitudinal axis A, and comprises a first end chamber (17), at least one evaporation compartment (19), and a second end chamber (21), arranged within said enclosure (2) along the longitudinal axis A,
the MVR-unit (13) further comprises a central tube (12) running along the longitudinal axis A of the enclosure (2) through the center of the at least one evaporation compartment (19),
and configured to allow steam to flow from the second end chamber (17) to the first end chamber (21) of the enclosure, and a turbine assembly (14) comprising a turbine provided with turbine vane members structured to provide steam flow in an axial direction, i.e. along the longitudinal axis, within said central tube (12) from the second end (6) to the first end (4) of the enclosure (2),
the at least one evaporation compartment (19) of the MVR-unit (13) is arranged to receive a working liquid from the absorption cooler unit (15) via a working liquid line (23), wherein hot water condensate from the first end chamber (17) of the MVR-unit (13) is arranged to be supplied to the absorption cooler unit via a hot water line (25), and wherein, as water evaporates in said evaporation compartment (19), a working liquid salt brine solution in said at least one evaporation compartment is arranged to be supplied via a salt brine solution line (27) to said absorption cooler unit (15), and that the absorption cooler unit (15) comprises two compartments separated by a partial inner wall (29), a first compartment (31) into which the salt brine solution is supplied, and a second compartment (33) into which the hot water condensate is supplied, wherein the two compartments are under high vacuum,
a cooling line (35) is provided and immersed in water within the second compartment (33), the inlet of the cooling line (35) is connected to a cooling system of the electrical vehicle, the heat carried by the liquid supplied to the cooling line (35) will then heat the water within the second compartment (33) of the absorption cooler unit (15), which then evaporates even faster, and the outlet of the cooling line (35) is provided with a cooling liquid,
a first heat exchanger (37) is arranged at said hot water line (25) configured to transfer heat from the hot water condensate in the hot water line to a heating liquid in a heating line (39),
wherein said control system (5) is configured to receive said temperature signal (9), and to control said thermal energy arrangement (11) in dependence of said at least one temperature, to supply said generated thermal energy to said battery system (3) via said cooling line (35) and said heating line (39) to keep the temperature of said battery system (3) within said predetermined temperature interval.

2. The electrical vehicle (1) according to claim 1, wherein said working liquid is a lithium bromide solution in combination with an anti-freezing solution and water, and having a freezing temperature less than -40 °C.

3. The electrical vehicle (1) according to claim 1 or 2, wherein said working liquid salt brine solution is essentially a lithium bromide salt brine solution and any anti-freezing solution.

4. The electrical vehicle (1) according to any of claims 1-3, wherein a high vacuum pump (41) is arranged in connection to the second compartment (33) to provide high vacuum within the absorption cooler unit (15).

5. The electrical vehicle (1) according to any of claims 1-4, wherein a second heat exchanger (43) is arranged at the working liquid line (23) to further increase the temperature of the working liquid by receiving heat from the salt brine solution.

6. The electrical vehicle (1) according to any of claims 1-5, wherein said MVR-unit (13) and said absorption cooler unit (15) are arranged within a common enclosure making up said thermal energy arrangement (11), and wherein said common enclosure comprises a hermetically sealed cylindrical enclosure having an essentially circular cross-section.

7. The electrical vehicle (1) according to any of claims 1-6, wherein said thermal energy is supplied to said battery system (3) via said cooling line (35) and said heating line (39), and that said battery system (3) is provided with a cooling/heating pipe system structured to receive liquid from said cooling line (35) and said heating line (39).

8. The electrical vehicle (1) according to any of claims 1-7, wherein said at least one evaporation compartment (19) comprises two essentially planar and circular sidewalls (8) separating the evaporation compartment from the end chambers, the at least one evaporation compartment is provided with a plurality of longitudinal pipes (10) running from one sidewall (8) to the other sidewall (8), and that the circular sidewalls are provided with openings for said plurality of pipes thereby establishing connection between the first end chamber (17) and the second end chamber (21).

9. The electrical vehicle (1) according to any of claims 1-8, wherein said turbine assembly (14) is arranged in relation to said first end (4) of the enclosure (2) and at least partly within said central tube (12), and that the turbine assembly (14) also comprises a motor (20) for rotating said turbine at a variable rotational speed.

10. The electrical vehicle (1) according to claim 9, wherein water is separated from the working liquid by evaporation inside the at least one evaporation compartment (19), the steam is compressed when flowing through the central tube by being accelerated by said turbine member.

11. The electrical vehicle (1) according to any of claims 1-10, wherein said thermal energy arrangement (11) is further arranged to supply thermal energy from said cooling liquid and heating liquid to cool and/or heat various parts of the electrical vehicle.

## Patentansprüche

1. Elektrofahrzeug (1), umfassend ein Batteriesystem (3), das dazu konfiguriert ist, elektrische Energie zum Betreiben des Elektrofahrzeugs zu erzeugen, ein Steuersystem (5), das dazu konfiguriert ist, verschiedene Systeme des Elektrofahrzeugs zu steuern, ein Temperaturüberwachungssystem (7), das dazu konfiguriert ist, mindestens eine Temperatur des Batteriesystems (3) zu überwachen und ein Temperatursignal (9) zu erzeugen, das die mindestens eine Temperatur umfasst, wobei das Batteriesystem mit einer Wärmeenergieanordnung (11) versehen ist, die angeordnet ist, um Wärmeenergie zuzuführen, um das Batteriesystem (3) innerhalb eines optimalen Betriebstemperaturintervalls zu halten, **dadurch gekennzeichnet, dass** die Wärmeenergieanordnung (11) eine Einheit zur mechanischen Dampfrückkompression, MVR, (13) und eine Absorptionskühlereinheit (15) umfasst, wobei die MVR-Einheit (13) ein druckdichtes Gehäuse (2) umfasst, das mit einem ersten Ende (4) und einem zweiten Ende (6) versehen ist und eine im Wesentlichen kreiszylindrische längliche Form entlang einer Längsachse A aufweist, und eine erste Endkammer (17), mindestens einen Verdampfungsraum (19) und eine zweite Endkammer (21) umfasst, die innerhalb des Gehäuses (2) entlang der Längsachse A angeordnet sind,
die MVR-Einheit (13) ferner ein zentrales Rohr (12), das entlang der Längsachse A des Gehäuses (2) durch die Mitte des mindestens einen Verdampfungsraums (19) verläuft und dazu konfiguriert ist, zu ermöglichen, dass Dampf von der zweiten Endkammer (17) zu der ersten Endkammer (21) des Gehäuses strömt, und eine Turbinenbaugruppe (14) umfasst, die eine Turbine umfasst, die mit Turbinenleitschaufelelementen versehen ist, die so strukturiert sind, dass sie eine Dampfströmung in einer axialen Richtung, d. h. entlang der Längsachse, innerhalb des zentralen Rohres (12) vom zweiten Ende (6) zum ersten Ende (4) des Gehäuses (2) bereitstellen,
der mindestens eine Verdampfungsraum (19) der MVR-Einheit (13) angeordnet ist, um eine Arbeitsflüssigkeit von der Absorptionskühlereinheit (15) über eine Arbeitsflüssigkeitsleitung (23) aufzunehmen, wobei Heißwasserkondensat aus der ersten Endkammer (17) der MVR-Einheit (13) angeordnet ist, um der Absorptionskühlereinheit über eine Heißwasserleitung (25) zugeführt zu werden, und wobei bei Verdampfung von Wasser in dem Verdampfungsraum (19) eine Arbeitsflüssigkeitssalzsolelösung in dem mindestens einen Verdampfungsraum angeordnet ist, um über eine Salzsolelösungsleitung (27) der Absorptionskühlereinheit (15) zugeführt zu werden, und dass die Absorptionskühlereinheit (15) zwei durch eine partielle Innenwand (29) getrennte Räume, einen ersten Raum (31), dem die Salzsolelösung zugeführt wird, und einen zweiten Raum (33), dem das Heißwasserkondensat zugeführt wird, umfasst, wobei die zwei Räume unter Hochvakuum stehen,
eine Kühlleitung (35) im zweiten Raum (33) vorgesehen und in Wasser eingetaucht ist, der Einlass der Kühlleitung (35) mit einem Kühlsystem des Elektrofahrzeugs verbunden ist, die Wärme, die von der Flüssigkeit getragen wird, die der Kühlleitung (35) zugeführt wird, dann das Wasser innerhalb des zweiten Raums (33) der Absorptionskühlereinheit (15) erwärmt, das dann noch schneller verdampft, und der Auslass der Kühlleitung (35) mit einer Kühlflüssigkeit versehen ist,
ein erster Wärmetauscher (37) an der Heißwasserleitung (25) angeordnet ist, die dazu konfiguriert ist, Wärme von dem Heißwasserkondensat in der Heißwasserleitung zu einer Heizflüssigkeit in einer Heizleitung (39) zu übertragen, wobei das Steuersystem (5) dazu konfiguriert ist, das Temperatursignal (9) zu empfangen und die Wärmeenergieanordnung (11) in Abhängigkeit von der mindestens einen Temperatur zu steuern, um die erzeugte Wärmeenergie dem Batteriesystem (3) über die Kühlleitung (35) und die Heizleitung (39) zuzuführen, um die Temperatur des Batteriesystems (3) innerhalb des vorbestimmten Temperaturintervalls zu halten.

2. Elektrofahrzeug (1) nach Anspruch 1, wobei die Arbeitsflüssigkeit eine Lithiumbromidlösung in Kombination mit einer Frostschutzlösung und Wasser ist und eine Gefriertemperatur von weniger als -40 °C aufweist.

3. Elektrofahrzeug (1) nach Anspruch 1 oder 2, wobei die Arbeitsflüssigkeitssalzsolelösung im Wesentlichen eine Lithiumbromidsalzsolelösung und eine beliebige Frostschutzlösung ist.

4. Elektrofahrzeug (1) nach einem der Ansprüche 1-3, wobei eine Hochvakuumpumpe (41) in Verbindung mit dem zweiten Raum (33) angeordnet ist, um Hochvakuum innerhalb der Absorptionskühlereinheit (15) bereitzustellen.

5. Elektrofahrzeug (1) nach einem der Ansprüche 1-4, wobei ein zweiter Wärmetauscher (43) an der Arbeitsflüssigkeitsleitung (23) angeordnet ist, um die Temperatur der Arbeitsflüssigkeit weiter zu erhöhen, indem Wärme von der Salzsolelösung aufgenommen wird.

6. Elektrofahrzeug (1) nach einem der Ansprüche 1-5, wobei die MVR-Einheit (13) und die Absorptionskühlereinheit (15) innerhalb eines gemeinsamen Gehäuses angeordnet sind, das die Wärmeenergieanordnung (11) bildet, und wobei das gemeinsame Gehäuse ein hermetisch abgedichtetes zylindrisches Gehäuse mit einem im Wesentlichen kreisförmigen Querschnitt umfasst.

7. Elektrofahrzeug (1) nach einem der Ansprüche 1-6, wobei die Wärmeenergie dem Batteriesystem (3) über die Kühlleitung (35) und die Heizleitung (39) zugeführt wird und wobei das Batteriesystem (3) mit einem Kühl-/Heizrohrsystem versehen ist, das so strukturiert ist, dass es Flüssigkeit aus der Kühlleitung (35) und der Heizleitung (39) aufnimmt.

8. Elektrofahrzeug (1) nach einem der Ansprüche 1-7, wobei der mindestens eine Verdampfungsraum (19) zwei im Wesentlichen planare und kreisförmige Seitenwände (8) umfasst, die den Verdampfungsraum von den Endkammern trennen, wobei der mindestens eine Verdampfungsraum mit einer Vielzahl von Längsrohren (10) versehen ist, die von einer Seitenwand (8) zu der anderen Seitenwand (8) verlaufen, und wobei die kreisförmigen Seitenwände mit Öffnungen für die Vielzahl von Rohren versehen sind, wodurch eine Verbindung zwischen der ersten Endkammer (17) und der zweiten Endkammer (21) hergestellt wird.

9. Elektrofahrzeug (1) nach einem der Ansprüche 1-8, wobei die Turbinenbaugruppe (14) in Bezug auf das erste Ende (4) des Gehäuses (2) und zumindest teilweise innerhalb des zentralen Rohrs (12) angeordnet ist und wobei die Turbinenbaugruppe (14) zudem einen Motor (20) zum Drehen der Turbine mit einer variablen Drehzahl umfasst.

10. Elektrofahrzeug (1) nach Anspruch 9, wobei Wasser von der Arbeitsflüssigkeit durch Verdampfung innerhalb des mindestens einen Verdampfungsraums (19) getrennt wird, wobei der Dampf komprimiert wird, wenn er durch das zentrale Rohr strömt, indem er durch das Turbinenelement beschleunigt wird.

11. Elektrofahrzeug (1) nach einem der Ansprüche 1-10, wobei die Wärmeenergieanordnung (11) ferner angeordnet ist, um Wärmeenergie von der Kühlflüssigkeit und der Heizflüssigkeit zuzuführen, um verschiedene Teile des Elektrofahrzeugs zu kühlen und/oder zu erwärmen.

## Revendications

1. Véhicule électrique (1) comprenant un système de batterie (3) configuré pour générer de l'énergie électrique pour faire fonctionner le véhicule électrique, un système de commande (5) configuré pour commander divers systèmes du véhicule électrique, un système de surveillance de température (7) configuré pour surveiller au moins une température dudit système de batterie (3), et pour générer un signal de température (9) comprenant ladite au moins une température, dans lequel ledit système de batterie est muni d'un agencement d'énergie thermique (11) agencé pour fournir de l'énergie thermique pour maintenir le système de batterie (3) dans un intervalle de températures de fonctionnement optimal, **caractérisé en ce que** ledit agencement d'énergie thermique (11) comprend une unité de recompression mécanique de vapeur, MVR, (13) et une unité de refroidisseur par absorption (15), l'unité MVR (13) comprend une enceinte (2) étanche à la pression munie d'une première extrémité (4) et d'une deuxième extrémité (6), et ayant une forme allongée cylindrique essentiellement circulaire le long d'un axe longitudinal A, et comprend une première chambre d'extrémité (17), au moins un compartiment d'évaporation (19), et une deuxième chambre d'extrémité (21), agencés au sein de ladite enceinte (2) le long de l'axe longitudinal A,
l'unité MVR (13) comprend en outre un tube central (12) s'étendant le long de l'axe longitudinal A de l'enceinte (2) à travers le centre de l'au moins un compartiment d'évaporation (19), et configuré pour permettre à de la vapeur de circuler de la deuxième chambre d'extrémité (17) à la première chambre d'extrémité (21) de l'enceinte, et un ensemble turbine (14) comprenant une turbine munie d'éléments d'aube de turbine structurés pour fournir une circulation de vapeur dans une direction axiale, c'est-à-dire le long de l'axe longitudinal, au sein dudit tube central (12) de la deuxième extrémité (6) à la première extrémité (4) de l'enceinte (2),
l'au moins un compartiment d'évaporation (19) de l'unité MVR (13) est agencé pour recevoir un liquide de travail à partir de l'unité de refroidisseur par absorption (15) via une conduite de liquide de travail (23), dans lequel un condensat d'eau chaude à partir de la première chambre d'extrémité (17) de l'unité MVR (13) est agencé pour être fourni à l'unité de refroidisseur par absorption via une conduite d'eau chaude (25), et dans lequel, lorsque l'eau s'évapore dans ledit compartiment d'évaporation (19), une solution de saumure liquide de travail dans ledit au moins un compartiment d'évaporation est agencée pour être fournie via une conduite de solution de saumure (27) à ladite unité de refroidisseur par absorption (15), et l'unité de refroidisseur par absorption (15) comprend deux compartiments séparés par une paroi interne partielle (29), un premier compartiment (31) dans lequel la solution de saumure est fournie, et un deuxième compartiment (33) dans lequel le condensat d'eau chaude est fourni, dans lequel les deux compartiments sont sous vide poussé,
une conduite de refroidissement (35) est prévue et immergée dans de l'eau au sein du deuxième compartiment (33), l'entrée de la conduite de refroidissement (35) est raccordée à un système de refroidissement du véhicule électrique, la chaleur transportée par le liquide fourni à la conduite de refroidissement (35) chauffe alors l'eau au sein du deuxième compartiment (33) de l'unité de refroidisseur par absorption (15), qui s'évapore alors encore plus rapidement, et la sortie de la conduite de refroidissement (35) est munie d'un liquide de refroidissement,
un premier échangeur de chaleur (37) est agencé au niveau de ladite conduite d'eau chaude (25) configuré pour transférer de la chaleur du condensat d'eau chaude dans la conduite d'eau chaude à un liquide de chauffage dans une conduite de chauffage (39),
dans lequel ledit système de commande (5) est configuré pour recevoir ledit signal de température (9), et pour commander ledit agencement d'énergie thermique (11) en fonction de ladite au moins une température, pour fournir ladite énergie thermique générée audit système de batterie (3) via ladite conduite de refroidissement (35) et ladite conduite de chauffage (39) pour maintenir la température dudit système de batterie (3) au sein dudit intervalle de températures prédéterminé.

2. Véhicule électrique (1) selon la revendication 1, dans lequel ledit liquide de travail est une solution de bromure de lithium en combinaison avec une solution antigel et de l'eau, et ayant une température de gel inférieure à -40 °C.

3. Véhicule électrique (1) selon la revendication 1 ou 2, dans lequel ladite solution de saumure liquide de travail est essentiellement une solution de saumure de bromure de lithium et une solution antigel quelconque.

4. Véhicule électrique (1) selon l'une quelconque des revendications 1 à 3, dans lequel une pompe à vide poussé (41) est agencée en raccordement avec le deuxième compartiment (33) pour fournir un vide poussé au sein de l'unité de refroidisseur par absorption (15).

5. Véhicule électrique (1) selon l'une quelconque des revendications 1 à 4, dans lequel un deuxième échangeur de chaleur (43) est agencé au niveau de la conduite de liquide de travail (23) pour élever davantage la température du liquide de travail par réception de chaleur à partir de la solution de saumure.

6. Véhicule électrique (1) selon l'une quelconque des revendications 1 à 5, dans lequel ladite unité MVR (13) et ladite unité de refroidisseur par absorption (15) sont agencées au sein d'une enceinte commune constituant ledit agencement d'énergie thermique (11), et dans lequel ladite enceinte commune comprend une enceinte cylindrique scellée hermétiquement ayant une coupe transversale essentiellement circulaire.

7. Véhicule électrique (1) selon l'une quelconque des revendications 1 à 6, dans lequel ladite énergie thermique est fournie audit système de batterie (3) via ladite conduite de refroidissement (35) et ladite conduite de chauffage (39), et dans lequel ledit système de batterie (3) est muni d'un système de tuyaux de refroidissement/chauffage structuré pour recevoir du liquide à partir de ladite conduite de refroidissement (35) et de ladite conduite de chauffage (39).

8. Véhicule électrique (1) selon l'une quelconque des revendications 1 à 7, dans lequel ledit au moins un compartiment d'évaporation (19) comprend deux parois latérales (8) essentiellement planes et circulaires séparant le compartiment d'évaporation des chambres d'extrémité, l'au moins un compartiment d'évaporation est muni d'une pluralité de tuyaux longitudinaux (10) s'étendant d'une paroi latérale (8) à l'autre paroi latérale (8), et les parois latérales circulaires sont pourvues d'ouvertures pour ladite pluralité de tuyaux, ce qui établit un raccordement entre la première chambre d'extrémité (17) et la deuxième chambre d'extrémité (21).

9. Véhicule électrique (1) selon l'une quelconque des revendications 1 à 8, dans lequel ledit ensemble turbine (14) est agencé en lien avec ladite première extrémité (4) de l'enceinte (2) et au moins en partie au sein dudit tube central (12), et l'ensemble turbine (14) comprend également un moteur (20) pour mettre en rotation ladite turbine à une vitesse de rotation variable.

10. Véhicule électrique (1) selon la revendication 9, dans lequel l'eau est séparée du liquide de travail par évaporation à l'intérieur de l'au moins un compartiment d'évaporation (19), la vapeur est comprimée lorsqu'elle circule à travers le tube central en étant accélérée par ledit élément de turbine.

11. Véhicule électrique (1) selon l'une quelconque des revendications 1 à 10, dans lequel ledit agencement d'énergie thermique (11) est en outre agencé pour fournir de l'énergie thermique à partir dudit liquide de refroidissement et dudit liquide de chauffage pour refroidir et/ou chauffer diverses parties du véhicule électrique.
